(19) **Europäisches Patentamt**
**European Patent Office**
**Office européen des brevets**

(11) **EP 4 538 111 A1**

(12) **EUROPEAN PATENT APPLICATION**
published in accordance with Art. 153(4) EPC

(43) Date of publication:
**16.04.2025 Bulletin 2025/16**

(21) Application number: **23918233.0**

(22) Date of filing: **14.12.2023**

(51) International Patent Classification (IPC):
**B60L 58/22** (2019.01)

(52) Cooperative Patent Classification (CPC):
**B60L 58/22;** Y02T 10/70

(86) International application number:
**PCT/CN2023/138855**

(87) International publication number:
**WO 2024/156233 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.01.2023 CN 202310105523**

(71) Applicants:
• **ZHEJIANG ZEEKR INTELLIGENT TECHNOLOGY
CO., LTD.
Ningbo, Zhejiang 315899 (CN)**
• **Viridi Energy Mobility Technology
(Ningbo) Co., Ltd.
Ningbo, Zhejiang 315336 (CN)**

• **Zhejiang Geely Holding Group Co., Ltd.
Hangzhou, Zhejiang 310051 (CN)**

(72) Inventors:
• **YANG, Shuai
Ningbo, Zhejiang 315899 (CN)**
• **ZHANG, Rongjia
Ningbo, Zhejiang 315899 (CN)**
• **ZHANG, Lin
Ningbo, Zhejiang 315899 (CN)**
• **CHEN, Xiao
Ningbo, Zhejiang 315899 (CN)**
• **ZHOU, Yufeng
Ningbo, Zhejiang 315899 (CN)**

(74) Representative: **Range, Christopher William
Withers & Rogers LLP
2 London Bridge
London SE1 9RA (GB)**

(54) **BATTERY PACK EQUALIZATION METHOD AND APPARATUS, VEHICLE, AND STORAGE MEDIUM**

(57) The present disclosure relates to the field of battery technologies, and more particularly, to a method and apparatus for equalizing a battery pack, a vehicle, and a storage medium. The method includes: determining whether a current battery pack meets a predetermined offline equalization condition; determining, in response to the current battery pack meeting the predetermined offline equalization condition, a target cell to be equalized in the current battery pack, an equalization time length of the target cell, and a periodic wake-up duration; and equalizing the target cell based on the equalization time length of the target cell, controlling a battery management system to enter a sleep mode, obtaining a duration for which the battery management system is in the sleep mode, waking up the battery management system in response to the duration reaching the periodic wake-up duration, and re-determining whether the current battery pack meets the predetermined offline equalization condition. Therefore, problems in the related art that the target cell that needs to be equalized fails to be accurately determined and a balance between a consistency among battery cells and high energy of the vehicle cannot be maintained are solved, making the equalization target more accurately determined.

EP 4 538 111 A1

Determine whether a current battery pack meets a predetermined offline equalization condition ⟩ S101

Determine, in response to the current battery pack meeting the predetermined offline equalization condition, a target cell to be equalized in the current battery pack, an equalization time length of the target cell, and a periodic wake-up duration ⟩ S102

Equalize the target cell based on the equalization time length of the target cell, controlling a battery management system to enter a sleep mode, obtaining a duration for which the battery management system is in the sleep mode, waking up the battery management system in response to the duration reaching the periodic wake-up duration, and re-determining whether the current battery pack meets the predetermined offline equalization condition, until the current battery pack fails to meet the predetermined offline equalization condition ⟩ S103

FIG. 1

**Description**

**CROSS-REFERENCE TO RELATED APPLICATION**

This application is based on and claims priority to Chinese Patent Application No. CN202310105523.1 filed on January 29, 2023, the entire contents of which are incorporated herein by reference.

**FIELD**

The present disclosure relates to the field of battery technologies, and more particularly, to a method and apparatus for equalizing a battery pack, a vehicle, and a storage medium.

**BACKGROUND**

At present, a battery used in an electric vehicle is becoming increasingly large in capacity. With use of the vehicle and aging of the battery itself, an inconsistency between battery cells is progressively deteriorating.

To ensure a consistency between battery cells, a general equalization function developed, either active equalization or passive equalization, is to perform passive discharge or energy transfer between battery cells based on a voltage difference or a State of Charge (SOC) difference between the battery cells under a condition that a battery management system of the vehicle wakes up. This method is mainly performed when the vehicle wakes up. Due to limitations of a capacity of an equalization circuit itself, this method works well for a battery having a small ampere-hour rating. However, for a battery having a very large capacity, this method is unable to achieve a desired effect due to a limited operation time length, about 2 hours to 4 hours per day for a passenger vehicle, failing to ensure the consistency between battery cells.

A technical scheme of general offline equalization developed on this basis focuses on extending an equalization time length. That is, prior to a main controller of the battery management system entering a sleep mode, a collection chip of a battery monitoring unit is activated to enter an offline equalization mode. A cell to be equalized, the equalization time length, and a duty ratio are set. Then, the main controller enters the sleep mode. The collection chip performs, based on a predetermined parameter, equalization on the cell to be equalized in accordance with an expected duty ratio, until the set equalization time length is reached. In this way, an operation time length of the equalization is no longer constrained by the operation time length of a vehicle system.

However, during operation, issues such as polarization of a battery cell voltage and an SOC error lead to inaccurate calculation of the equalization time length. When the equalization circuit or a collection circuit experiences serious faults, the system is unable to equalize a corresponding cell or equalizes a target cell incorrectly, affecting equalization performance. In addition, since offline equalization is performed in a sleep mode of a main control unit, a battery cell collection unit lacks an ability to calculate and determine a system state. When abnormal faults occur, the battery cell collection unit is unable to respond to the abnormal faults in time, leading to a failure in maintaining a high consistency between battery cells.

**SUMMARY**

The present disclosure provides a method and apparatus for equalizing a battery pack, a vehicle, and a storage medium, aiming at solving problems in the related art such as an inability to accurately determine a target cell that needs to be equalized, an inability to maintain a balance between a consistency among battery cells and high energy of a vehicle, and an erroneous determination or an equalization failure due to an abnormal state. Therefore, the equalization target is determined more accurately, which improves reliability and usability of software functions. Also, a high level of available charge and discharge energy of the vehicle is sustained while maintaining the consistency between battery cells.

In a first aspect, a method for equalizing a battery pack is provided according to embodiments of the present disclosure. The method includes: determining whether a current battery pack meets a predetermined offline equalization condition; determining, in response to the current battery pack meeting the predetermined offline equalization condition, a target cell to be equalized in the current battery pack, an equalization time length of the target cell, and a periodic wake-up duration; and equalizing the target cell based on the equalization time length of the target cell, controlling a battery management system to enter a sleep mode, obtaining a duration for which the battery management system is in the sleep mode, waking up the battery management system in response to the duration reaching the periodic wake-up duration, and re-determining whether the current battery pack meets the predetermined offline equalization condition, until the current battery pack fails to meet the predetermined offline equalization condition.

In some embodiments, said determining whether the current battery pack meets the predetermined offline equalization condition includes: obtaining a current operation condition of a vehicle, state information of the battery pack, and state information of the battery management system; and determining that the current battery pack meets the predetermined offline equalization condition, in response to the current operation condition of the vehicle, the state information of the battery pack, and the state information of the battery management system meeting respective predetermined equalization conditions.

In some embodiments, said determining the target cell to be equalized in the current battery pack, the equalization time length of the target cell, and the periodic wake-up duration includes: collecting current battery information and unit circuit information of the current battery pack; and calculating a voltage difference between each battery cell and a minimum battery cell based on the current battery information and the unit circuit information, and determining the target cell based on the voltage difference and an offline equalization voltage difference threshold. The offline equalization voltage difference threshold is determined based on an equalization capability of the battery management system and a vehicle battery cell consistency.

In some embodiments, the method further includes, prior to said determining whether the current battery pack meets the predetermined offline equalization condition: initializing the battery management system based on a predetermined initialization strategy; and performing a self-test on the battery management system based on a predetermined self-test strategy subsequent to completion of the initialization, and periodically detecting a voltage and a temperature of each battery cell subsequent to completion of the self-test.

In some embodiments, the method further includes, subsequent to said obtaining the duration for which the battery management system is in the sleep mode: determining whether a wake-up instruction is received before the duration reaches the periodic wake-up duration; and initializing the battery management system based on the predetermined initialization strategy in response to receiving the wake-up instruction.

In a second aspect, an apparatus for equalizing a battery pack is provided according to embodiments of the present disclosure. The apparatus includes: a determination module configured to determine whether a current battery pack meets a predetermined offline equalization condition; a determining module configured to determine, in response to the current battery pack meeting the predetermined offline equalization condition, a target cell to be equalized in the current battery pack, an equalization time length of the target cell, and a periodic wake-up duration; and an equalizing module configured to equalize the target cell based on the equalization time length of the target cell, controlling a battery management system to enter a sleep mode, obtain a duration for which the battery management system is in the sleep mode, wake up the battery management system in response to the duration reaching the periodic wake-up duration, and re-determine whether the current battery pack meets the predetermined offline equalization condition, until the current battery pack fails to meet the predetermined offline equalization condition.

In some embodiments, the determination module is further configured to: obtain a current operation condition of a vehicle, state information of the battery pack, and state information of the battery management system; and determine that the current battery pack meets the predetermined offline equalization condition, in response to the current operation condition of the vehicle, the state information of the battery pack, and the state information of the battery management system meeting respective predetermined equalization conditions.

In some embodiments, the determining module is further configured to: collect current battery information and unit circuit information of the current battery pack; and calculate a voltage difference between each battery cell and a minimum battery cell based on the current battery information and the unit circuit information, and determine the target cell based on the voltage difference and an offline equalization voltage difference threshold, wherein the offline equalization voltage difference threshold is determined based on an equalization capability of the battery management system and a vehicle battery cell consistency.

In some embodiments, the determination module is further configured to, prior to said determining whether the current battery pack meets the predetermined offline equalization condition: perform an initialization on the battery management system based on a predetermined initialization strategy; and perform a self-test on the battery management system based on a predetermined self-test strategy subsequent to completion of the initialization, and periodically detect a voltage and a temperature of each battery cell subsequent to completion of the self-test.

In some embodiments, the equalizing module is further configured to, subsequent to said obtaining the duration for which the battery management system is in the sleep mode: determine whether a wake-up instruction is received before the duration reaches the periodic wake-up duration; and initialize the battery management system based on the predetermined initialization strategy in response to receiving the wake-up instruction.

In a third aspect, a vehicle is provided according to embodiments of the present disclosure. The vehicle includes: a memory; a processor; and a computer program stored in the memory and executable on the processor. The processor executes the computer program to implement the method for equalizing a battery pack according to above embodiments.

In a fourth aspect, a computer-readable storage medium is provided according to embodiments of the present disclosure. The computer-readable storage medium stores a computer program. The computer program is executed by a processor to implement the method for equalizing a battery pack according to the above embodiments.

In this way, in response to the current battery pack meeting the offline equalization condition, the target cell that needs to be equalized, the equalization time length of the target cell, and the periodic wake-up duration are determined. The target cell is equalized based on the equalization time length of the target cell. The battery management system is controlled to enter the sleep mode. The battery management system is periodically woken up. Whether the current battery pack meets the offline equalization condition is re-determined, until the current battery pack fails to meet the offline equalization condition. In this way, the problems in the related art such as the inability to accurately determine the target cell that needs to be equalized, the inability to maintain the balance between the consistency among battery cells and high energy of the vehicle, and the erroneous determination or the equalization failure due to the abnormal state are solved. Therefore, the equalization target is determined more accurately, which improves the reliability and the usability of software functions. Also, the high level of available charge and discharge energy of the vehicle is sustained while maintaining the consistency between battery cells.

Additional aspects and advantages of the present disclosure will be provided at least in part in the following description, or will become apparent at least in part from the following description, or can be learned from practicing of the present disclosure.

**BRIEF DESCRIPTION OF THE DRAWINGS**

The above and/or additional aspects and advantages of the present disclosure will become more apparent and more understandable from the following description of embodiments taken in conjunction with the accompanying drawings.

FIG. 1 is a flowchart of a method for equalizing a battery pack according to an embodiment of the present disclosure.
FIG. 2 is a flowchart of determining a target cell to be equalized according to an embodiment of the present disclosure.
FIG. 3 is a flowchart of a battery pack calibration test according to an embodiment of the present disclosure.
FIG. 4 is a schematic MAP chart of a battery pack calibration test according to an embodiment of the present disclosure.
FIG. 5 is a flowchart of calculating a sleep time length according to an embodiment of the present disclosure.
FIG. 6 is a flowchart of a method for equalizing a battery pack according to an embodiment of the present disclosure.
FIG. 7 is a schematic block diagram of an apparatus for equalizing a battery pack according to an embodiment of the present disclosure.
FIG. 8 is a schematic structural diagram of a vehicle according to an embodiment of the present disclosure.

**DETAILED DESCRIPTION**

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

A method and apparatus for equalizing a battery pack, a vehicle, and a storage medium according to the embodiments of the present disclosure are described below with reference to the accompanying drawings. To address the problems mentioned in the background such as the inability to accurately determine the target cell that needs to be equalized, the inability to maintain the balance between a consistency between battery cells and high energy of the vehicle, and the erroneous determination or the equalization failure due to the abnormal state, the present disclosure provides the method for equalizing the battery pack. With this method, whether a vehicle meets an offline equalization condition is determined. A target cell that needs to be equalized, an equalization time length of the target cell, and a periodic wake-up duration are determined in response to the vehicle meeting the offline equalization condition. The target cell is equalized based on the equalization time length of the target cell. A battery management system is controlled to enter a sleep mode. The battery management system is periodically woken up to further determine whether the offline equalization condition is met. In this way, the problems in the related art such as the inability to accurately determine the target cell that needs to be equalized, the inability to maintain the balance between the consistency among battery cells and high energy of the vehicle, and the erroneous determination or the equalization failure due to the abnormal state are solved. Therefore, the equalization target is determined more accurately, which improves reliability and usability of software functions. Also, a high level of available charge and discharge energy of the vehicle is sustained while maintaining the consistency between battery cells.

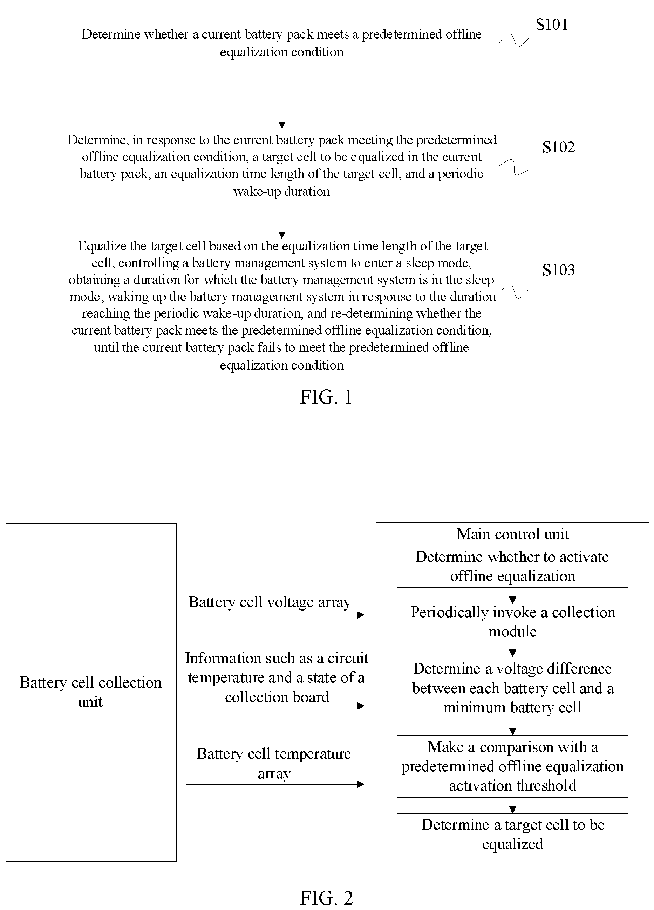

In an exemplary embodiment of the present disclosure, FIG. 1 is a schematic flowchart of a method for equalizing a battery pack according to an embodiment of the present disclosure.

As illustrated in FIG. 1, the method for equalizing the battery pack includes the following operations at blocks S101 to S103.

At block S101, whether a current battery pack meets a predetermined offline equalization condition is determined.

In some embodiments, determining whether the current battery pack meets the predetermined offline equalization condition includes: obtaining a current operation condition of the vehicle, state information of the battery pack, and state information of the battery management system; and determining that the current battery pack meets the predetermined offline equalization condition, in response to the current operation condition of the vehicle, the state information of the battery pack, and the state information of the battery management system meeting respective predetermined equalization conditions.

The predetermined offline equalization condition may be that the current operation condition allows offline equalization, and the state information of the battery pack and the state information of the battery management system have no abnormality. The state information of the battery pack having no abnormality may include that polarization of an Open Circuit Voltage (OCV) of a battery cell currently woken up has been eliminated.

It should be understood that, currently, a degree of electrification of a vehicle is very high. The vehicle may experience various operation conditions throughout an entire lifecycle, which puts high demands on reliability and usability of software functions. When problems such as loose connectors, poor contact of collection wiring harness, short circuit or open circuit, and line aging occur during an operation of the vehicle, functions of a main control unit and a collection unit may be affected. In this case, the collection unit may encounter occasional inaccurate data collection, with values fluctuating up and down, and the main control unit may perform a logical determination or fault warning. On the one hand, a certain time period is needed, and on the other hand, different treatments for different operation conditions need to be considered, which affect activation and operation of a system equalization function. Therefore, in the embodiments of the present disclosure, when the vehicle disconnects a relay and in a relatively stable state, a basic state check is performed to determine whether a condition for activating offline equalization is met.

In an exemplary embodiment of the present disclosure, the collection unit of the battery cell periodically collects a voltage of a battery and a temperature of the battery cell and transmits the voltage of the battery cell and the temperature of the battery cell to the main control unit. The main control unit executes functional logic and state calculations based on a current system state and state information of the battery cell. When the main control unit prepares to power down and enter a sleep mode, the main control unit makes a logical determination, to determine, based on the voltage of the battery cell and the temperature of the battery cell that are input by the collection unit of the battery cell and information of a collection board itself and in combination of the current operation of the vehicle, whether the offline equalization is supported and whether the state information of the battery pack and the state information of the battery management system are suitable for executing the offline equalization, i.e., to comprehensively determine whether the predetermined offline equalization condition is met. The main control unit may be a main logic control board of the battery management system. The collection unit may be a collection board of the battery management system for collecting the voltage of the battery cell and the temperature of the battery cell. The main control unit and the collection unit simultaneously perform an equalization function. In an exemplary embodiment of the present disclosure, when the current operation condition of the vehicle does not allow the offline equalization, the system does not enter offline equalization. When the polarization of the OCV of the battery cell currently woken up by the system is not eliminated, the system may not enter offline equalization. In consideration of a multi-point physical failure, when the battery system has various abnormalities such as a line fault in a collection circuit, an under-voltage fault in the battery cell, and an over-temperature fault, the system may not enter offline equalization

At block S102, in response to the current battery pack meeting the predetermined offline equalization condition, a target cell to be equalized in the current battery pack, an equalization time length of the target cell, and a periodic wake-up duration are determined.

In some embodiments, determining the target cell to be equalized in the current battery pack, the equalization time length of the target cell, and the periodic wake-up duration includes: collecting current battery information and unit circuit information of the current battery pack; and calculating a voltage difference between each battery cell and a minimum battery cell based on the current battery information and the unit circuit information, and determining the target cell based on the voltage difference and an offline equalization voltage difference threshold. The offline equalization voltage difference threshold is determined based on an equalization capability of the battery management system and a vehicle battery cell consistency.

It should be noted that, during the operation of the vehicle, neither an accurate OCV nor an accurate SOC can be obtained due to continuous charging and discharging of the battery cell. In this case, the target cell to be equalized cannot be accurately determined. In an implementation of the present disclosure, a maximum time parameter TOCV after the current battery cell stopping charging and discharging under extreme operation conditions and the polarization of the battery cell voltage being eliminated may be obtained. The main control unit starts timing after disconnecting the relay. When the TOCV period elapses, the OCV is collected based on the current state information, a value of the SOC is corrected, and the target cell to be equalized is determined.

In an exemplary embodiment of the present disclosure, when the main control unit prepares to power down and enter the sleep mode, the main control unit performs the logical determination to determine that an offline equalization function may be activated, determines the target cell that needs to be equalized and the corresponding equalization time length, and calculates a sleep time length required for the system. In an exemplary embodiment of the present disclosure, as illustrated in FIG. 2, the main control unit periodically invokes the collection unit Active Front End (AFE) to collect the current battery information and collection unit circuit information. The main control unit determines the voltage difference between each battery cell and the minimum battery cell, and compares the voltage difference for each battery cell with a predetermined voltage difference threshold to determine the target cell to be equalized.

The predetermined voltage difference threshold for equalization needs to be set in consideration of requirements of an equalization capability of the system and the vehicle battery cell consistency. The equalization capability of the system needs to take into account an effective equalization current of the equalization circuit and the equalization time length (an offline equalization time length is controllable but shorter than a sleep time length of the vehicle).

Effective Equalization Current × Offline Equalization Time Length per Day = Maximum Equalization Capacity Value per Day, recorded as $C_{offBalance}$.

The requirement of the vehicle battery cell consistency needs to take into account available charge and discharge energy of the vehicle under charge and discharge conditions subsequent to current equalization.

It should be noted that, the offline equalization voltage difference threshold in the embodiments of the present disclosure may be determined based on the equalization capability of the battery management system and the vehicle battery cell consistency.

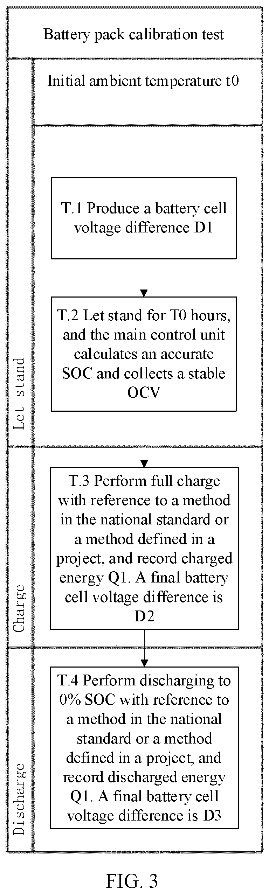

As illustrated in FIG. 3, according to an embodiment of the present disclosure, a corresponding MAP relationship may be obtained through a test, and then the offline equalization voltage difference threshold may be determined.

t0: an initial ambient temperature a battery pack is determined.

Static phase:

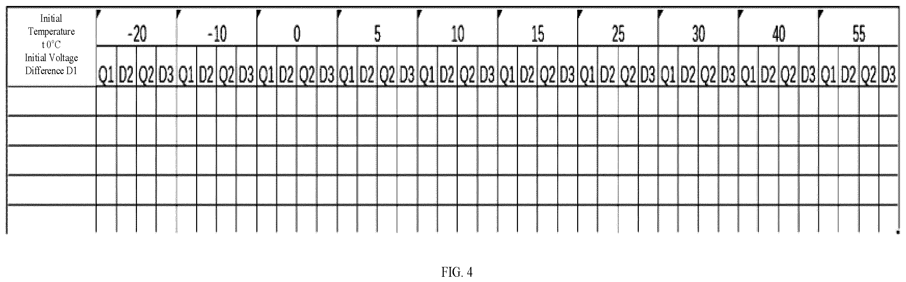

T.1. At a battery pack level, a predetermined voltage difference of D1 mV between one or a small number of cells and current common cells is produced. A value of D1 is set as illustrated in a MAP table in FIG. 4.

T.2. Let stand for T0 hours. When a temperature of the battery pack is consistent with the ambient temperature, the main control unit calculates an accurate SOC and collects a stable OCV.

Charge phase:

T.3. Full charge is performed. A value of charged energy is recorded and denoted as Q1. A final battery cell voltage difference is D2 mV.

Discharge Phase:

T.4. Full discharge is performed. A value of discharged energy is recorded and denoted as Q2.

The final battery cell voltage difference is D3 mV.

For specific methods for full charge and full discharge tests, reference can be made to the national standard GB/T31467.1/.2, or be defined as desired. Description of operations between charging and discharging such as current control and letting stand will be omitted here.

A MAP table similar to that illustrated in FIG. 4 is formed. On a basis of the above data, a relatively small offline equalization threshold is selected in an accumulated full-charge to full-discharge period of the vehicle based on an influence of the battery cell voltage difference on the charge and discharge energy of the vehicle:

$$C_{total} = C_{offBalance} \times T_{Sleep} \times T_{interval},$$

where $C_{total}$ represents a theoretical value of equalization capacity, $T_{interval}$ represents an accumulated full-charge to full-discharge interval of the vehicle, and is measured in days, $T_{Sleep}$ represents a daily sleep time length of the vehicle and is measured in hours, and $C_{offBalance}$ represents a maximum equalization capacity value per day.

Based on an initial battery cell voltage difference D1 and test data of Q1 and Q2, a minimum battery cell voltage requirement acceptable to the vehicle is determined. Based on a relationship between $C_{total}$ and the initial battery cell voltage D1, a threshold within an equalization capability range is finally selected. An offline equalization trigger threshold may be slightly less than a vehicle target value to prevent a sudden change in an equalization determination state.

Through a predetermined test, a battery cell voltage difference threshold $D_{refer}$ that needs to be maintained under a condition of vehicle parking is determined based on a relationship between the vehicle battery cell voltage difference and the charge and discharge energy. An entry threshold D1 of the offline equalization in an actual project implementation process may be slightly less than $D_{refer}$. Due to a large current battery cell capacity, it takes 10 hours to equalize about 1 Ah of electricity, which is approximately equal to 1% SOC or the voltage difference of 8 mV to 10mV. Therefore, an equalization ending voltage D2 is set to a smaller value based on a main control unit self-wake-up cycle and the equalization capability, i.e., D2 << D1 (D2 is much less than D1), in such a manner that a controller is incapable of achieving this goal in one self-wake-up cycle.

In each self-wake-up cycle of the controller: when the battery cell voltage difference $D_{elta}OCV>D1$, an entry condition is satisfied, and the offline equalization is executed. When the battery cell voltage difference $D_{elta}OCV<D1$, the entry condition is unsatisfied, and the offline equalization is not executed this time. Therefore, on the one hand, trigger times of the offline equalization may be reduced. On the other hand, a long execution duration can effectively maintain the battery cell consistency at a high level, without wasting too much energy of the vehicle.

The equalization time length of the target cell according to the embodiments of the present disclosure is calculated as follows:

$$T_{offbalance} = C(D_{trigger}, D_{end}) / I,$$

where $T_{offbalance}$ represents the equalization time length of the target battery cell, C represents a capacity of the target battery cell that needs to be equalized, $D_{trigger}$ represents an offline equalization trigger voltage difference threshold, $D_{end}$ represents an offline equalization voltage difference ending threshold, and I represents an effective equalization current.

The threshold $D_{end}$ is set based on a requirement of reducing the 12V power consumption of the vehicle, which may be set to a target value that cannot be reached during a current sleep time length of the system. On the one hand, the power consumption of the vehicle can be reduced. On the other hand, a multi-point failure of software and read and write issues in a memory area are considered. Subsequent to waking up the system from the sleep mode again, all parameters in a system initialization process are reset and used again without setting other thresholds, reducing software complexity and improving software reliability.

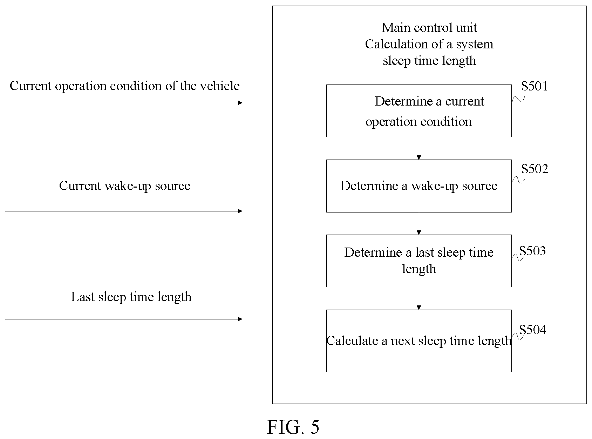

A main logic of calculation in setting the sleep time length, setting the target cell to be equalized, and setting the sleep time length in the equalization time length is illustrated in FIG. 5.

At S501, when a current operation condition of the vehicle involves intense charging and discharging, it is set not to perform the offline equalization this time, and a next sleep time length is set to $T_{polarization}$, which represents a duration during which the polarization of the OCV of the battery cell completely disappears.

At S502, whether a wake-up source of a current wake-up is a vehicle wake-up or a self-wake-up is determined.

At S503, a last sleep time length is calculated to determine whether the last sleep time length exceeds the parameter $T_{polarization}$. When the last sleep time length exceeds the parameter $T_{polarization}$, the offline equalization can be performed in this sleep time length.

At S504, when the offline equalization is not performed this time, the next sleep time length is set to $T_{polarization}$. When the offline equalization is performed this time, the next sleep time length is set to a periodic time length $T_{regular}$. The periodic time length $T_{regular}$ needs to be confirmed with the vehicle, in such a manner that the 12V power consumption of the vehicle is reduced.

At S103, the target cell is equalized based on the equalization time length of the target cell, the battery management system is controlled to enter the sleep mode, a duration for which the battery management system is in the sleep mode is obtained, the battery management system is woken up in response to the duration reaching the periodic wake-up duration, and whether the current battery pack meets the predetermined offline equalization condition is re-determined, until the current battery pack fails to meet the predetermined offline equalization condition.

Those skilled in the art should understand that when the system performs the offline equalization, the main control unit is in the sleep state and does not perform any data operation or logic processing. In this case, when faults such as a circuit problem, a chip problem of the collection unit, an equalization circuit problem, and an internal short circuit of the battery pack occur, more severe faults such as drift of collected data, short circuits of the equalization circuit, and over-discharging of the battery cell may occur during an activation of the equalization circuit, in which case the main control unit is unable to handle these problems. In the embodiments of the present disclosure, subsequent to the main control unit triggering the offline equalization function, the self-wake-up may be periodically performed, an initialization is performed to detect a state of the whole system, and whether the offline equalization is further performed is determined.

In an exemplary embodiment of the present disclosure, the main control unit sets the sleep time length, transmits the sleep time length to a Real_Time Clock (RTC) or a System Basis Chip (SBC), sets the target cell to be equalized and the corresponding equalization time length, and transmits the target cell to be equalized and the corresponding equalization time length to a battery cell collection unit. The battery cell collection unit sets the target cell to be equalized, the corresponding equalization time length, and an equalization duty ratio based on a signal of the main control unit, writes the target cell to be equalized, the corresponding equalization time length, and the equalization duty ratio into an AFE register. The main control unit enters the sleeps mode. The RTC or the SBC enters a low power consumption mode. Timing is started. The battery cell collection unit enters an offline equalization mode, executes offline equalization for the target cell based on information written in the register in accordance with the set duty ratio and the set time length, periodically performs self-wake-up subsequent to the main control unit triggering the offline equalization function, executes an initialization to detect the state of the whole system, and determines whether to further perform the offline equalization.

In some embodiments, the method further includes, prior to determining whether the current battery pack meets the predetermined offline equalization condition: initializing the battery management system based on a predetermined initialization strategy; and performing a self-test on the battery management system based on a predetermined self-test strategy subsequent to completion of the initialization, and periodically detecting a voltage and a temperature of each battery cell subsequent to completion of the self-test.

The predetermined initialization strategy and the predetermined self-test strategy may be predetermined by a relevant person, and are not specifically limited herein.

In an exemplary embodiment of the present disclosure, prior to determining whether the current battery pack meets the predetermined offline equalization condition, the initialization is performed on the battery management system.

1. The main control unit is woken up to systematically execute the initialization of the whole system, and perform initialization on the battery cell collection unit.

2. The initialization is performed on the battery cell collection unit. The offline equalization function is stopped. The collection unit and the main control unit are started. The collection unit communicates with the main control unit. A collection of a voltage and a temperature of the battery cell is started.

3. The main control unit starts the self-test of the whole system to detect current states of software and hardware of the system, including states of hardware chips, circuits, various collection lines, and sensors.

4. The battery cell collection unit completes the initialization, starts to periodically collect the voltage and the temperature of the battery cell, and transmits the voltage and the temperature of the battery cell to the main control unit.

5. The main control unit starts to operate normally, and periodically detects and determines the voltage and the temperature of the battery cell.

In some embodiments, the method further includes, subsequent to obtaining the duration for which the battery management system is in the sleep mode: determining whether a wake-up instruction is received before the duration reaches the periodic wake-up duration; and initializing the battery management system based on the predetermined initialization strategy in response to receiving the wake-up instruction.

In an actual execution process, in addition to periodic self-wake-up, the vehicle may also accept other wake-up methods, such as user wake-up. The vehicle determines whether the wake-up instruction is received before the duration reaches the periodic wake-up duration. When the wake-up execution is received, the battery management system is initialized based on the predetermined initialization strategy to further determine whether the offline equalization is needed.

To enable those skilled in the art to further understand the method for equalizing the battery pack according to the embodiments of the present disclosure, detailed description is made below with reference to specific embodiments.

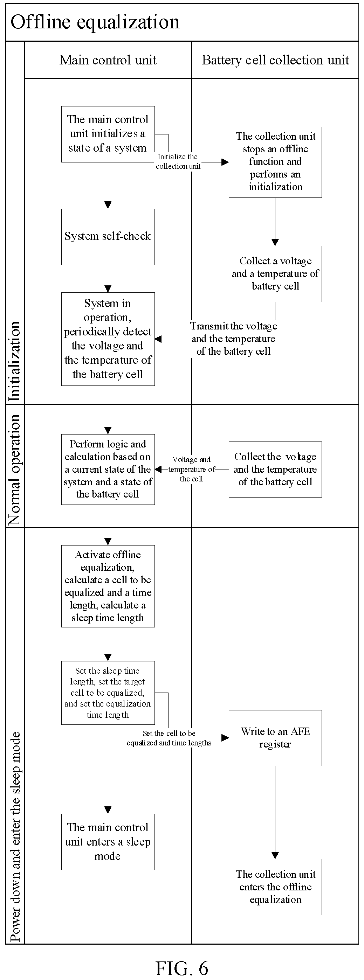

FIG. 6 illustrates a method for equalizing a battery pack according to an embodiment of the present disclosure.

As illustrated in FIG. 6, the main control unit initializes the system state and the collection unit. The collection unit stops an offline function and performs an initialization. The main control unit performs a self-test on the system. The collection unit completes the collection of the voltage and the temperature of the battery cell, and transmits the collected voltage and temperature of the battery cell to the main control unit. The main control unit executes the system, periodically detects the voltage and the temperature of the battery cell, and executes logic and a calculation based on the current state, activates the offline equalization, calculates the offline target cell to be equalized, the time length, and the sleep time length, sets the sleep time length, the target cell to be equalized, and the equalization time length, and transmits the set target cell to be equalized and the set time lengths to the collection unit. The collection unit writes the set target cell to be equalized and the set time lengths into the AFE register. The main control unit enters the sleep mode. The collection unit enters the offline equalization.

In this way, the main control unit times the TOCV after disconnecting the relay, and re-collects the voltage of the battery cell for an equalization determination after the polarization voltage is eliminated. In this case, there is no polarization in charging and discharging of the battery cell. Therefore, the obtained OCV voltage of the battery cell and the target to be equalized are more accurate. The main control unit may determine whether to perform the offline equalization function subsequent to the vehicle disconnecting the relay, the cell being in a stable state, and a basic state of the system being detected. The main control unit may also perform the self-wake-up periodically to detect the states of software and hardware of the system, which can improve a coverage of a circuit fault detection. Also, the controller can avoid circuit aging or other accidental faults, and avoid an equalization failure due to circuit problems. Based on a multi-point failure analysis, software functions have higher reliability and usability.

With the method for equalizing the battery pack according to the embodiments of the present disclosure, whether the vehicle meets the offline equalization condition is determined. The target cell that needs to be equalized, the equalization time length of the target cell, and the periodic wake-up duration are determined in response to the vehicle meeting the offline equalization condition. The target cell is equalized based on the equalization time length of the target cell. The battery management system is controlled to enter the sleep mode. The battery management system is periodically woken up to further determine whether the offline equalization condition is met. In this way, the problems in the related art such as the inability to accurately determine the target cell that needs to be equalized, the inability to maintain the balance between the consistency among battery cells and high energy of the vehicle, and the erroneous determination or the equalization failure due to the abnormal state are solved. Therefore, the equalization target is determined more accurately, which improves the reliability and the usability of the software functions. Also, a high level of available charge and discharge energy of the vehicle is sustained while maintaining the consistency between battery cells.

An apparatus for equalizing a battery pack according to the embodiments of the present disclosure is described below with reference to the accompanying drawings.

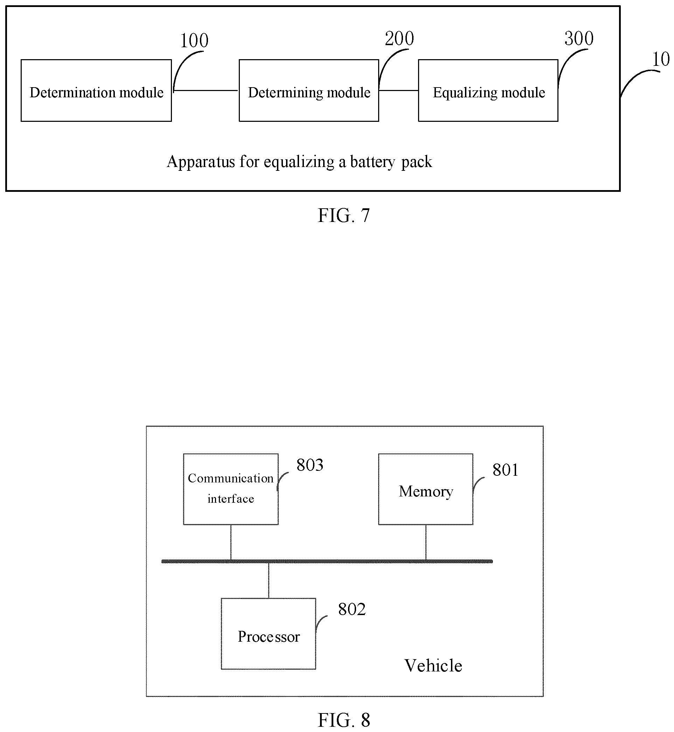

FIG. 7 is a schematic block diagram of an apparatus for equalizing a battery pack according to an embodiment of the present disclosure.

As illustrated in FIG. 7, an apparatus 10 for equalizing a battery pack includes a determination module 100, a determining module 200, and an equalizing module 300.

The determination module 100 is configured to determine whether a current battery pack meets a predetermined offline equalization condition. The determining module 200 is configured to determine, in response to the current battery pack meeting the predetermined offline equalization condition, a target cell to be equalized in the current battery pack, an equalization time length of the target cell, and a periodic wake-up duration. The equalizing module 300 is configured to equalize the target cell based on the equalization time length of the target cell, control a battery management system to enter a sleep mode, obtain a duration for which the battery management system is in the sleep mode, wake up the battery management system in response to the duration reaching the periodic wake-up duration, and re-determine whether the current battery pack meets the predetermined offline equalization condition, until the current battery pack fails to meet the predetermined offline equalization condition.

In some embodiments, the determination module 100 is further configured to: obtain a current operation condition of a vehicle, state information of the battery pack, and state information of the battery management system; and determine that the current battery pack meets the predetermined offline equalization condition, in response to the current operation condition of the vehicle, the state information of the battery pack, and the state information of the battery management system meeting respective predetermined equalization conditions.

In some embodiments, the determining module 200 is further configured to: collect current battery information and unit circuit information of the current battery pack; and calculate a voltage difference between each battery cell and a minimum battery cell based on the current battery information and the unit circuit information, and determine the target cell based on the voltage difference and an offline equalization voltage difference threshold. The offline equalization voltage difference threshold is determined based on an equalization capability of the battery management system and a vehicle battery cell consistency.

In some embodiments, the determination module 200 is further configured to, prior to determining whether the current battery pack meets the predetermined offline equalization condition: perform an initialization on the battery management system based on a predetermined initialization strategy; and perform a self-test on the battery management system based on a predetermined self-test strategy subsequent to completion of the initialization, and periodically detect a voltage and a temperature of each battery cell subsequent to completion of the self-test.

In some embodiments, the equalizing module 300 is further configured to, subsequent to obtaining the duration for which the battery management system is in the sleep mode: determine whether a wake-up instruction is received before the duration reaches the periodic wake-up duration; and initialize the battery management system based on the predetermined initialization strategy in response to receiving the wake-up instruction.

It should be noted that, the foregoing explanation of the embodiments of the method for equalizing the battery pack is also applicable to the apparatus for equalizing the battery pack of the embodiments, and thus details thereof will be omitted here

With the apparatus for equalizing the battery pack according to the embodiments of the present disclosure, whether the vehicle meets the offline equalization condition is determined. The target cell that needs to be equalized, the equalization time length of the target cell, and the periodic wake-up duration are determined in response to the vehicle meeting the offline equalization condition. The target cell is equalized based on the equalization time length of the target cell. The battery management system is controlled to enter the sleep mode. The battery management system is periodically woken up to further determine whether the offline equalization condition is met. In this way, the problems in the related art such as the inability to accurately determine the target cell that needs to be equalized, the inability to maintain the balance between the consistency among battery cells and high energy of the vehicle, and the erroneous determination or the equalization failure due to the abnormal state are solved. Therefore, the equalization targe is determined more accurately, which improves the reliability and the usability of the software functions. Also, a high level of available charge and discharge energy of the vehicle is sustained while maintaining the consistency between battery cells.

FIG. 8 is a schematic structural diagram of a vehicle according to an embodiment of the present disclosure. The vehicle may include a memory 801, a processor 802, and a computer program stored in the memory 801 and executable on the processor 802.

The processor 802, when executing the computer program, implements the method for equalizing the battery pack according to the above embodiments.

In addition, the vehicle further includes a communication interface 803 configured for communication between the memory 801 and the processor 802 and the memory 801 configured to store the computer program executable on the processor 802.

The memory 801 may include a high-speed Random Access Memory (RAM), and may also include a non-volatile memory, such as at least one magnetic disk storage.

When the memory 801, the processor 802, and the communication interface 803 are implemented independently, the communication interface 803, the memory 801, and the processor 802 may be interconnected and communicate with each other via a bus. The bus may be an Industry Standard Architecture (ISA) bus, a Peripheral Component (PCI) bus, an Extended Industry Standard Architecture (EISA) bus, or the like. The buses may be divided into an address bus, a data bus, a control bus, etc. For ease of description, only one thick line is illustrated in FIG. 8, but it does not indicate that there is only one bus or one type of bus.

In another exemplary embodiment of the present disclosure, in a specific implementation, when the memory 801, the processor 802, and the communication interface 803 are integrated on a single chip for an implementation, the memory 801, the processor 802, and the communication interface 803 may communicate with each other through an internal interface.

The processor 802 may be a Central Processing Unit (CPU), an Application Specific Integrated Circuit (ASIC), or one or more integrated circuits configured to implement an embodiment of the present disclosure.

The embodiments of the present disclosure further provide a computer-readable storage medium having a computer program stored thereon. The computer program, when executed by a processor, implements the method for equalizing the battery pack according to the above embodiments.

In the description of this specification, descriptions with reference to the terms "an embodiment", "some embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. In addition, those skilled in the art can combine the different embodiments or examples and the features of the different embodiments or examples described in this specification without contradicting each other.

In addition, the terms "first" and "second" are only used for descriptive purposes, and cannot be understood as indicating or implying relative importance or implicitly indicating the number of indicated technical features. Therefore, the features defined with "first" and "second" may explicitly or implicitly include at least one of the features. In the description of the present disclosure, "N" means at least two, such as two, three, etc., unless otherwise specifically defined.

Any process or method described in a flowchart or described herein in other ways may be understood to include one or N modules, segments, or portions of codes of executable instructions for achieving specific logical functions or steps in the process. The scope of a preferred embodiment of the present disclosure includes other implementations. A function may be performed not in a sequence shown or discussed, including a substantially simultaneous manner or a reverse sequence based on the function involved, which should be understood by those skilled in the art to which the embodiments of the present disclosure belong.

It should be understood that each part of the present disclosure may be realized by hardware, software, firmware, or a combination thereof. In the above embodiments, N steps or methods may be realized by software or firmware stored in the memory and executed by an appropriate instruction execution system. For example, when it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a Programmable Gate Array, a Field Programmable Gate Array, etc.

It should be understood by those skilled in the art that all or a part of the steps carried by the method in the above-described embodiments may be completed by relevant hardware instructed by a program. The program may be stored in a computer-readable storage medium. When the program is executed, one or a combination of the steps of the method in the above-described embodiments may be included.

Although embodiments of the present disclosure have been illustrated and described above, it should be understood that the above embodiments are merely exemplary, and cannot be construed to limit the present disclosure. For those skilled in the art, changes, alternatives, and modifications can be made to the embodiments without departing from the scope of the present disclosure.

**Claims**

1. A method for equalizing a battery pack, the method comprising:

   determining whether a current battery pack meets a predetermined offline equalization condition;

determining, in response to the current battery pack meeting the predetermined offline equalization condition, a target cell to be equalized in the current battery pack, an equalization time length of the target cell, and a periodic wake-up duration; and

equalizing the target cell based on the equalization time length of the target cell, controlling a battery management system to enter a sleep mode, obtaining a duration for which the battery management system is in the sleep mode, waking up the battery management system in response to the duration reaching the periodic wake-up duration, and re-determining whether the current battery pack meets the predetermined offline equalization condition, until the current battery pack fails to meet the predetermined offline equalization condition.

2. The method according to claim 1, wherein said determining whether the current battery pack meets the predetermined offline equalization condition comprises:

obtaining a current operation condition of a vehicle, state information of the battery pack, and state information of the battery management system; and

determining that the current battery pack meets the predetermined offline equalization condition, in response to the current operation condition of the vehicle, the state information of the battery pack, and the state information of the battery management system meeting respective predetermined equalization conditions.

3. The method according to claim 1, wherein said determining the target cell to be equalized in the current battery pack, the equalization time length of the target cell, and the periodic wake-up duration comprises:

collecting current battery information and unit circuit information of the current battery pack; and

calculating a voltage difference between each battery cell and a minimum battery cell based on the current battery information and the unit circuit information, and determining the target cell based on the voltage difference and an offline equalization voltage difference threshold, wherein the offline equalization voltage difference threshold is determined based on an equalization capability of the battery management system and a vehicle battery cell consistency.

4. The method according to claim 3, further comprising, prior to said determining whether the current battery pack meets the predetermined offline equalization condition:

performing an initialization on the battery management system based on a predetermined initialization strategy; and

performing a self-test on the battery management system based on a predetermined self-test strategy subsequent to completion of the initialization, and periodically detecting a voltage and a temperature of each battery cell subsequent to completion of the self-test.

5. The method according to claim 4, further comprising, subsequent to said obtaining the duration for which the battery management system is in the sleep mode:

determining whether a wake-up instruction is received before the duration reaches the periodic wake-up duration; and

initializing the battery management system based on the predetermined initialization strategy in response to receiving the wake-up instruction.

6. An apparatus for equalizing a battery pack, the apparatus comprising:

a determination module configured to determine whether a current battery pack meets a predetermined offline equalization condition;

a determining module configured to determine, in response to the current battery pack meeting the predetermined offline equalization condition, a target cell to be equalized in the current battery pack, an equalization time length of the target cell, and a periodic wake-up duration; and

an equalizing module configured to equalize the target cell based on the equalization time length of the target cell, control a battery management system to enter a sleep mode, obtain a duration for which the battery management system is in the sleep mode, wake up the battery management system in response to the duration reaching the periodic wake-up duration, and re-determine whether the current battery pack meets the predetermined offline equalization condition.

7. The apparatus according to claim 6, wherein the determination module is further configured to:

obtain a current operation condition of a vehicle, state information of the battery pack, and state information of the battery management system; and

determine that the current battery pack meets the predetermined offline equalization condition, in response to the current operation condition of the vehicle, the state information of the battery pack, and the state information of the battery management system meeting respective predetermined equalization conditions.

8. The apparatus according to claim 6, wherein the determining module is further configured to:

collect current battery information and unit circuit information of the current battery pack; and calculate a voltage difference between each battery cell and a minimum battery cell based on the current battery information and the unit circuit information, and determine the target cell based on the voltage difference and an offline equalization voltage difference threshold, wherein the offline equalization voltage difference threshold is determined based on an equalization capability of the battery management system and a vehicle battery cell consistency.

9. A vehicle, comprising:

a memory;
a processor; and
a computer program stored in the memory and executable on the processor,
wherein the processor executes the computer program to implement the method for equalizing a battery pack according to any one of claims 1 to 5.

10. A computer-readable storage medium, having a computer program stored thereon, wherein the computer program is executed by a processor to implement the method for equalizing a battery pack according to any one of claims 1 to 5.

Determine whether a current battery pack meets a predetermined offline equalization condition — S101

Determine, in response to the current battery pack meeting the predetermined offline equalization condition, a target cell to be equalized in the current battery pack, an equalization time length of the target cell, and a periodic wake-up duration — S102

Equalize the target cell based on the equalization time length of the target cell, controlling a battery management system to enter a sleep mode, obtaining a duration for which the battery management system is in the sleep mode, waking up the battery management system in response to the duration reaching the periodic wake-up duration, and re-determining whether the current battery pack meets the predetermined offline equalization condition, until the current battery pack fails to meet the predetermined offline equalization condition — S103

FIG. 1

Battery cell collection unit

Battery cell voltage array →

Information such as a circuit temperature and a state of a collection board →

Battery cell temperature array →

Main control unit

Determine whether to activate offline equalization

↓

Periodically invoke a collection module

↓

Determine a voltage difference between each battery cell and a minimum battery cell

↓

Make a comparison with a predetermined offline equalization activation threshold

↓

Determine a target cell to be equalized

FIG. 2

| Battery pack calibration test | |
|---|---|
| | Initial ambient temperature t0 |
| Let stand | T.1 Produce a battery cell voltage difference D1 |
| | T.2 Let stand for T0 hours, and the main control unit calculates an accurate SOC and collects a stable OCV |
| Charge | T.3 Perform full charge with reference to a method in the national standard or a method defined in a project, and record charged energy Q1. A final battery cell voltage difference is D2 |
| Discharge | T.4 Perform discharging to 0% SOC with reference to a method in the national standard or a method defined in a project, and record discharged energy Q1. A final battery cell voltage difference is D3 |

FIG. 3

| Initial Temperature t 0°C | -20 | | | | -10 | | | | 0 | | | | 5 | | | | 10 | | | | 15 | | | | 25 | | | | 30 | | | | 40 | | | | 55 | | | |
|---|---|---|---|---|---|---|---|---|---|---|---|---|---|---|---|---|---|---|---|---|---|---|---|---|---|---|---|---|---|---|---|---|---|---|---|---|
| Initial Voltage Difference D1 | Q1 | D2 | Q2 | D3 | Q1 | D2 | Q2 | D3 | Q1 | D2 | Q2 | D3 | Q1 | D2 | Q2 | D3 | Q1 | D2 | Q2 | D3 | Q1 | D2 | Q2 | D3 | Q1 | D2 | Q2 | D3 | Q1 | D2 | Q2 | D3 | Q1 | D2 | Q2 | D3 |
| | | | | | | | | | | | | | | | | | | | | | | | | | | | | | | | | | | | | |
| | | | | | | | | | | | | | | | | | | | | | | | | | | | | | | | | | | | | |
| | | | | | | | | | | | | | | | | | | | | | | | | | | | | | | | | | | | | |
| | | | | | | | | | | | | | | | | | | | | | | | | | | | | | | | | | | | | |
| | | | | | | | | | | | | | | | | | | | | | | | | | | | | | | | | | | | | |

FIG. 4

Current operation condition of the vehicle

Current wake-up source

Last sleep time length

Main control unit
Calculation of a system
sleep time length

Determine a current
operation condition — S501

Determine a wake-up source — S502

Determine a last sleep time
length — S503

Calculate a next sleep time length — S504

FIG. 5

## Offline equalization

| | Main control unit | Battery cell collection unit |
|---|---|---|
| **Initialization** | The main control unit initializes a state of a system → *Initialize the collection unit* → | The collection unit stops an offline function and performs an initialization |
| | System self-check | Collect a voltage and a temperature of battery cell |
| | System in operation, periodically detect the voltage and the temperature of the battery cell ← *Transmit the voltage and the temperature of the battery cell* | |
| **Normal operation** | Perform logic and calculation based on a current state of the system and a state of the battery cell ← *Voltage and temperature of the cell* | Collect the voltage and the temperature of the battery cell |
| **Power down and enter the sleep mode** | Activate offline equalization, calculate a cell to be equalized and a time length, calculate a sleep time length | |
| | Set the sleep time length, set the target cell to be equalized, and set the equalization time length → *Set the cell to be equalized and time lengths* → | Write to an AFE register |
| | The main control unit enters a sleep mode | The collection unit enters the offline equalization |

FIG. 6

100                                    200                                  300

| Determination module | | Determining module | | Equalizing module |

10

Apparatus for equalizing a battery pack

FIG. 7

803
Communication
interface

801
Memory

802
Processor

Vehicle

FIG. 8

## INTERNATIONAL SEARCH REPORT

International application No.

**PCT/CN2023/138855**

### A. CLASSIFICATION OF SUBJECT MATTER

B60L58/22(2019.01)i

According to International Patent Classification (IPC) or to both national classification and IPC

### B. FIELDS SEARCHED

Minimum documentation searched (classification system followed by classification symbols)

IPC:B60L

Documentation searched other than minimum documentation to the extent that such documents are included in the fields searched

Electronic data base consulted during the international search (name of data base and, where practicable, search terms used)

CNTXT; CJFD; WPABSC; ENTXTC: 离线, 电池, 均衡, 唤醒, 电池管理系统, 车; VEN; USTXT; EPTXT; WOTXT; WPABS: offline, battery, equalization, wake, BMS, vehicle.

### C. DOCUMENTS CONSIDERED TO BE RELEVANT

| Category* | Citation of document, with indication, where appropriate, of the relevant passages | Relevant to claim No. |
|---|---|---|
| PX | CN 115972985 A (ZHEJIANG JIKRYPTON INTELLIGENT TECHNOLOGY CO., LTD. et al.) 18 April 2023 (2023-04-18)<br>entire document | 1-10 |
| X | CN 109823232 A (CH-AUTO TECHNOLOGY CO., LTD.) 31 May 2019 (2019-05-31)<br>description, paragraphs 64-136, and figures 1-4 | 1-10 |
| X | CN 114069781 A (UNITED AUTOMOTIVE ELECTRONIC SYSTEMS CO., LTD.) 18 February 2022 (2022-02-18)<br>description, paragraphs 26-45, and figures 1-2 | 1-10 |
| A | CN 109428130 A (BYD CO., LTD.) 05 March 2019 (2019-03-05)<br>entire document | 1-10 |
| A | WO 2022183817 A1 (CHINA FAW CO., LTD.) 09 September 2022 (2022-09-09)<br>entire document | 1-10 |

☐ Further documents are listed in the continuation of Box C. ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 February 2024** | **08 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/138855**

| Patent document cited in search report | | | Publication date (day/month/year) | Patent family member(s) | | | Publication date (day/month/year) |
|---|---|---|---|---|---|---|---|
| CN | 115972985 | A | 18 April 2023 | None | | | |
| CN | 109823232 | A | 31 May 2019 | None | | | |
| CN | 114069781 | A | 18 February 2022 | WO | 2023082794 | A1 | 19 May 2023 |
| CN | 109428130 | A | 05 March 2019 | CN | 109428130 | B | 15 September 2020 |
| WO | 2022183817 | A1 | 09 September 2022 | CN | 113022378 | A | 25 June 2021 |
| | | | | CN | 113022378 | B | 07 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310105523